# EUROPÄISCHE PATENTSCHRIFT

(11) **EP 3 359 410 B1**
(45) Veröffentlichungstag und Bekanntmachung des Hinweises auf die Patenterteilung: **15.01.2020**
(21) Anmeldenummer: 16778360.4
(22) Anmeldetag: 07.10.2016
(51) Int. Cl.: B60K 28/16, B60W 30/184

(54) **ANTRIEBSVORRICHTUNG FÜR EIN ALLRADGETRIEBENES KRAFTFAHRZEUG**
DRIVE DEVICE FOR AN ALL-WHEEL-DRIVE MOTOR VEHICLE
DISPOSITIF D'ENTRAÎNEMENT D'UN VÉHICULE AUTOMOBILE À TRACTION INTÉGRALE

(30) Priorität: 07.10.2015 DE 102015013000
(43) Veröffentlichungstag der Anmeldung: 15.08.2018
(73) Patentinhaber: Audi AG, 85045 Ingolstadt (DE)
(72) Erfinder: ZÄPFEL, Steffen, 85092 Kösching (DE); WOHLRAB, Klaus, 91781 Weißenburg (DE); KOCH, Wolfgang, 85092 Kösching (DE); JANOSI, Ferenc, 80995 München (DE); WILD, Horst, 91238 Engelthal (DE)
(86) Internationale Anmeldenummer: PCT/EP2016/073958
(87) Internationale Veröffentlichungsnummer: WO 2017/060403

(56) Entgegenhaltungen:
- DE-A1- 19 603 427
- DE-A1-102009 005 378
- DE-A1-102010 028 546
- DE-A1-102012 020 908

## Beschreibung

Die Erfindung betrifft eine Antriebsvorrichtung für ein allradgetriebenes, zweispuriges Kraftfahrzeug nach dem Oberbegriff des Patentanspruches 1.

Bei allradgetriebenen Kraftfahrzeugen wird zwischen einem zuschaltbaren Allradantrieb und einem permanenten Allradantrieb unterschieden. Bei einem permanenten Allradantrieb wird das im Antriebsaggregat erzeugte Antriebsmoment über ein mechanisches Zwischenachsdifferenzial, zum Beispiel ein Torsendifferenzial, im Wesentlichen gleichmäßig zur Vorderachse und zur Hinterachse verteilt. Momenten- oder Drehzahlunterschiede werden über das Zwischenachsdifferenzial zwischen den beiden Fahrzeugachsen ausgeglichen. Im Unterschied dazu ist bei einem zuschaltbaren Allradantrieb das Zwischenachsdifferenzial durch eine starre Mittenkupplung ersetzt. Mittels der Mittenkupplung kann die Hinterachse bedarfsweise dem Antriebsstrang zugeschaltet oder davon entkoppelt werden. Bei einem solchen zuschaltbaren Allradantrieb erfolgt - im Unterschied zum obigen permanenten Allradantrieb mit Zwischenachsdifferenzial - kein Drehzahl- oder Momentenausgleich zwischen den Fahrzeugachsen.

Aus der DE 10 2012 020 908 A1 ist eine Antriebsvorrichtung für ein allradgetriebenes zweispuriges Kraftfahrzeug bekannt. In dem Antriebsstrang des Kraftfahrzeugs ist ein aus einer Brennkraftmaschine mit nachgeschaltetem Schaltgetriebe aufgebautes Antriebsaggregat angeordnet, das im Fahrbetrieb permanent auf die Vorderachse abtreibt. Die Getriebeausgangswelle ist bis zu einer Mittenkupplung geführt, die über eine Kardanwelle mit der Hinterachse trieblich verbunden ist. Im Geschlossenzustand ist die Mittenkupplung mit einem Kupplungsmoment beaufschlagt. Um Rutschfreiheit zu gewährleisten, kann die Mittenkupplung im Geschlossenzustand mit Überanpressung betrieben sein. In diesem Fall ist die Hinterachse dem Antriebsstrang starr zugeschaltet. Im Offenzustand der Mittenkupplung ist die Hinterachse vom Antriebsstrang abgekoppelt.

Im obigen starren Allradantrieb wird das im Fahrbetrieb vom Antriebsaggregat abgegebene Motormoment entsprechend dem Achsreibwert (wirkt zwischen den Fahrzeugrädern und der Fahrbahn) an der Vorderachse und dem Achsreibwert an der Hinterachse aufgeteilt. Exemplarisch beträgt bei gleichen Achsreibwerten das an der Vorderachse und an der Hinterachse absetzbare Radmoment jeweils 50% des vom Motor abgegebenen Gesamt-Radmoments.

Bei einer Fahrsituation mit zugeschalteten Allradantrieb sowie mit der Vorderachse auf Asphalt und mit der Hinterachse auf Eis ergibt sich die folgende Konstellation: in diesem Fall stellt die Vorderachse eine größere Momentenabsetzbarkeit als die Hinterachse bereit. Das heißt, dass an der Vorderachse ein größeres Radmoment absetzbar ist als an der Hinterachse mit kleinerem Achsreibwert. Dies kann dazu führen, dass das an der Vorderachse anliegende Radmoment einen kritischen Überlast-Schwellwert übersteigt. Daraus ergibt sich die Gefahr einer Achsüberlastung, insbesondere einer Überlastung des Kegeltriebes des Vorderachsdifferenzials.

Zum Schutz vor einer solchen Achsüberlastung kann bei einem Kraftfahrzeug mit reinem Frontantrieb eine Bauteil-Schutzfunktion realisiert sein, bei der das maximal zulässige Motormoment sich aus einer Addition eines im Steuergerät hinterlegten, konstruktiv vorgegebenen Überlast-Schwellwertes, bei dessen Erreichen die Gefahr einer Bauteilbeschädigung an der Vorderachse vorliegt, mit dem Motor-Trägheitsmoment berechnet. Das Motor-Trägheitsmoment wird zur Beschleunigung des Motors benötigt und belastet daher nicht die Vorderachse.

Dadurch ist zwar ein Schutz der Bauteile der Vorderachse vor Überlastung gewährleistet, jedoch ergeben sich durch die Motormoment-Begrenzung Einschränkungen bezüglich der Motor-Leistungsfähigkeit sowie ein Zeitverlust beim Anfahrvorgang und reduzierte Steig- bzw. Anfahrfähigkeiten an Steigungen.

Aus der DE 196 03 427 A1 ist eine gattungsgemäße Antriebsschlupfregelung für ein Allradantriebsfahrzeug bekannt. Aus der DE 2010 028546 A1 ist ein Verfahren zur Reduzierung des Motormomentes in einem Kraftfahrzeug bekannt.

Die Aufgabe der Erfindung besteht darin, eine Antriebsvorrichtung für ein allradgetriebenes Kraftfahrzeug bereitzustellen, bei der die Gefahr einer Achsüberlastung reduziert ist und gleichzeitig im Falle einer MotormomentenBegrenzung eine im Vergleich zum Stand der Technik reduzierte Motor-Leistungsfähigkeit vorliegt.

Die Aufgabe ist durch die Merkmale des Anspruches 1 gelöst. Bevorzugte Weiterbildungen der Erfindung sind in den abhängigen Ansprüchen offenbart.

Erfindungsgemäß weist das Steuergerät zur Vermeidung einer Achsüberlastung in der oben angedeuteten Fahrsituation eine Auswerteeinheit auf, mit der das maximal zulässige Motormoment ermittelbar und anpassbar ist. Das maximal zulässige Motormoment wird in der Auswerteeinheit durch Addition des konstruktiv vorgegebenen Überlast-Schwellwerts der Fahrzeugachse mit großem Achsreibwert mit zumindest einem maximal zulässigen potentiellen Trägheitsmomenten-Anteil an der Fahrzeugachse mit kleinem Achsreibwert ermittelt. Der Trägheitsmomenten-Anteil an der Fahrzeugachse mit kleinem Achsreibwert entlastet die Fahrzeugachse mit großem Achsreibwert. Bei der Berechnung des maximal zulässigen Motormomentes kann daher dieser Trägheitsmomenten-Anteil ohne weiteres dem Überlast-Schwellwert aufaddiert werden, ohne eine Überlastung der Fahrzeugachse mit hohem Achsreibwert zu riskieren.

Die weiteren Erfindungsaspekte werden nachfolgend zum einfacheren Verständnis anhand einer besonders relevanten Fahrsituation erklärt, bei der exemplarisch die Vorderachse des Allradantriebs auf Asphalt (das heißt hoher Achsreibwert an der Vorderachse) und die Hinterachse des Allradantriebs auf Eis (das heißt geringer Achsreibwert an der Hinterachse) abtreibt. Die Erfindungsaspekte sind jedoch nicht auf diese spezielle Fahrsituation beschränkt. Alternativ ist auch eine Fahrsituation denkbar, bei der an der Hinterachse ein hoher Achsreibwert und an der Vorderachse ein geringer Achsreibwert vorliegt.

Erfindungsgemäß weist die oben erwähnte Auswerteeinheit einen Programmbaustein auf, in dem der, die Vorderachse entlastende, potentiell mögliche Hinterachs-Trägheitsmomenten-Anteil ermittelbar ist. Hierzu weist der Programmbaustein eine erste Ermittlungseinheit auf, in der zunächst das an der Vorderachse maximal absetzbare Achsmoment ermittelt wird. In der ersten Ermittlungseinheit wird das an der Vorderachse maximal absetzbare Achsmoment auf der Grundlage eines vordefinierten maximalen Beladungszustandes sowie eines auf 1 gesetzten Vorderachsreibwert, zum Beispiel über Kennlinien oder tabellarisch, ermittelt. In dem vordefinierten maximalen Beladungszustand fließen der Fahrzeug-Schwerpunkt sowie ein Maximal-Gewicht bei Fahrzeug-Beladung ein. Zudem erfolgt die Ermittlung des maximal absetzbaren Vorderachsmomentes in Abhängigkeit von der aktuellen Fahrzeug-Längsbeschleunigung. Bei stehendem Fahrzeug entspricht die Längsbeschleunigung der Fahrbahn-Steigung. Bei beschleunigendem Fahrzeug entspricht die Längsbeschleunigung einem Gesamtwert aus der Fahrbahnsteigung und der Fahrzeug-Beschleunigung.

Das in der ersten Ermittlungseinheit ermittelte maximal absetzbare Vorderachsmoment wird zu einer Subtraktionseinheit geleitet, in der ein maximal zulässiges Vorderachs-Trägheitsmoment ermittelt wird, und Zwar durch Subtraktion des maximal absetzbaren Vorderachsmomentes vom Vorderachs-Überlast-Schwellwert. Das maximal zulässige Vorderachs-Trägheitsmoment definiert ein Potential, das (bei µ_{VA} = 1 sowie bei maximalen Beladungszustand) ein tatsächliches Vorderachs-Trägheitsmoment einnehmen darf, ohne dass der Vorderachs-Überlast-Schwellwert überschritten wird.

Die Auswerteeinheit weist zudem eine zweite Ermittlungseinheit auf, in der auf der Grundlage des maximal zulässigen Vorderachs-Trägheitsmoments der oben erwähnte Trägheitsmomenten-Anteil an der Hinterachse ermittelbar ist.

Aufgrund der starren Mittenkupplung zwischen den Vorder- und Hinterachsen verhält sich der Hinterachs-Trägheitsmomentenanteil direkt proportional zum Vorderachs-Trägheitsmoment, und zwar in Abhängigkeit der Trägheitsanteile der Komponenten der Fahrzeugachsen und den dazwischen liegenden Komponenten. Von daher werden in der zweiten Ermittlungseinheit die Massenträgheiten der Vorderachs-Komponenten mit den Massenträgheiten der Hinterachs-Komponenten in ein Masseträgheits-Verhältnis gesetzt. Unter Berücksichtigung des Masseträgheits-Verhältnisses wird (in einer einfachen Dreisatz-Berechnung) der Trägheitsmomenten-Anteil an der Hinterachse berechnet.

Die Auswerteeinheit kann außerdem einen weiteren Programmbaustein aufweisen, in dem ein an der Hinterachse absetzbares Mindest-Achsmoment abschätzbar ist. Ein solches Mindest-Achsmoment an der Hinterachse entlastet die Vorderachse. Bei der Berechnung des maximal zulässigen Motormomentes kann daher das Hinterachs-Mindest-Achsmoment - zusätzlich zum Hinterachs-Trägheitsmomentenanteil - dem Vorderachs-Überlast-Schwellwert aufaddiert werden.

In einer weiteren Ausführungsform kann die Antriebsvorrichtung eine elektronische Differenzialsperre aufweisen, mit der ein beim Anfahren durchdrehendes Hinterachs-Fahrzeugrad mit einem von der Bremsanlage generierten Bremsmoment gezielt abbremsbar ist. Dadurch wird über das Hinterachsdifferenzial das andere Hinterachs-Rad mit einem Zusatz-Drehmoment beaufschlagt, dessen Betrag dem des Bremsmomentes gleicht. Die Auswerteeinheit kann einen zusätzlichen Programmbaustein aufweisen, in dem das Zusatzmoment und das Bremsmoment zu einem EDS-Gesamtmoment summierbar sind. Dieses Gesamtmoment kann bei der Ermittlung des maximal zulässigen Motormomentes - zusätzlich zu den obigen potentiellen Trägheitsmomenten dem Vorderachs-Überlast-Schwellwert aufaddiert werden.

Zwischen den obigen Programmbausteinen zur Berechnung des EDS-Gesamtmomentes und des Mindest-Hinterachsmomentes kann ein erster Vergleicherbaustein zwischengeschaltet sein. Der erste Vergleicherbaustein kann den größeren Wert aus dem Mindest-Hinterachsmoment und dem EDS-Gesamtmoment zum Additionsglied weiterleiten und den kleineren Wert zurückhalten.

Dem ersten Vergleicherbaustein kann ein zweiter Vergleicherbaustein nachgeschaltet sein. Im zweiten Vergleicherbaustein wird das an der Hinterachse abgenommene Mindest-Hinterachsmoment oder das EDS-Gesamtmoment auf die Höhe des gestellten Mittenkupplungsmoments begrenzt (sofern dieses niedriger ist als die potentiell möglichen Hinterachsmomente).

Die obige Ermittlung des maximal zulässigen Motormomentes wird während eines Anfahrvorgangs kontinuierlich durchgeführt sowie angepasst. Auf diese Weise ergibt sich beim Anfahren ein wesentlich schnelleres Ansprechverhalten, da das maximale Motormoment im Vergleich zum Stand der Technik wesentlich höher setzbar ist und trotzdem noch einen Schutz der Vorderachskomponenten gewährleistet.

Die vorstehend erläuterten und/oder in den Unteransprüchen wiedergegebenen vorteilhaften Aus- und/oder Weiterbildungen der Erfindung können - außer zum Beispiel in den Fällen eindeutiger Abhängigkeiten oder unvereinbarer Alternativen - einzeln oder aber auch in beliebiger Kombination miteinander zur Anwendung kommen.

Die Erfindung und ihre vorteilhaften Aus- und Weiterbildungen sowie deren Vorteile werden nachfolgend anhand von Zeichnungen näher erläutert.

Es zeigen:
- Fig. 1: in einer schematischen Darstellung den Antriebsstrang eines zweispurigen Kraftfahrzeugs;
- Fig. 2: in einem vereinfachten Blockschaltdiagramm die Programmbausteine einer Auswerteeinheit eines elektronischen Steuergerätes, mit dem eine Motormomentenbegrenzung durchführbar ist; und
- Fig. 3: ein weiteres Blockschaltdiagramm, in dem die Ermittlung des Hinterachs-Trägheitsmomenten-Anteils veranschaulicht ist.

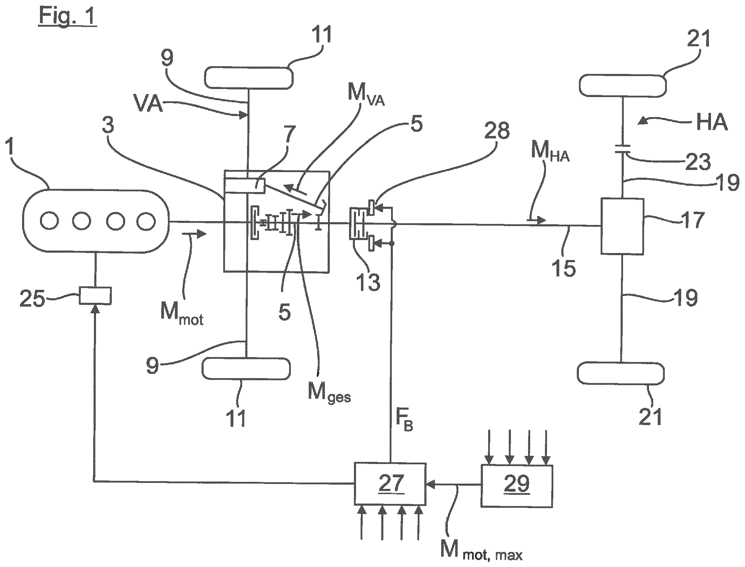

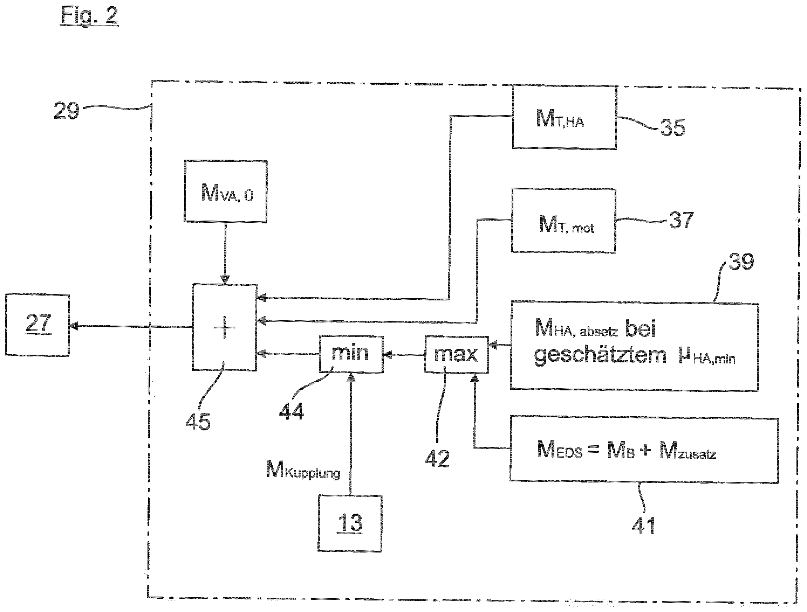

In der Fig. 1 ist ein Antriebsstrang in einem zweispurigen Kraftfahrzeug gezeigt. Die Fig. 1 und die Fig. 2 sind im Hinblick auf ein einfaches Verständnis der Erfindung angefertigt. Von daher sind die Figuren, lediglich grob vereinfachte Darstellungen, die keinen realitätsgetreuen Aufbau des Antriebsstranges oder der im elektronischen Steuergerät vorhandenen Software-Architektur wiedergeben.

Gemäß der Fig. 1 weist der Antriebsstrang des Kraftfahrzeugs ein Antriebsaggregat auf, das aus einer Brennkraftmaschine 1 und einem nachgeschalteten Schaltgetriebe 3 aufgebaut. Deren Getriebeausgangswelle 4 ist über eine Zahnradstufe 5 in trieblicher Verbindung mit einem Vorderachsdifferenzial 7 einer Vorderachse VA, das über Gelenkwellen 9 auf die Vorderräder 11 abtreibt.

Die Getriebeausgangswelle 4 ist fest mit einem Kupplungsgehäuse einer Mittenkupplung 13 verbunden, die mit einer Kardanwelle 15 koppelbar ist. Die Kardanwelle 15 treibt über ein Hinterachsdifferenzial 17 sowie über Gelenkwellen 19 auf die Hinterräder 21 einer Fahrzeughinterachse HA ab. In der rechten Gelenkwelle 19 der Hinterachse HA ist zudem eine Klauenkupplung verbaut.

Die Klauenkupplung 23, die Mittenkupplung 13 sowie ein Motorsteuergerät 25 der Brennkraftmaschine 1 sind in der Fig. 1 in Signalverbindung mit einem Steuergerät 27, das auf der Grundlage einer Vielzahl von Fahrbetriebsparametern eine Zu- oder Abschaltung des Allradantriebs des Kraftfahrzeuges steuert. Bei einem zugeschalteten Allradantrieb ergibt sich der in der Fig. 1 angedeutete Momentenfluss, wonach ein Motormoment Mₘₒₜ von der Brennkraftmaschine 1 zum Schaltgetriebe 3 geführt wird und dort als ein Gesamtradmoment an der Getriebeausgangswelle 4 anliegt. Das Gesamtradmoment M_{ges} wird in ein zur Vorderachse VA geführtes Radmoment M_{VA} und in ein über die geschlossene Lamellenkupplung 13 zur Hinterachse HA geführtes zweites Radmoment M_{HA} aufgeteilt. Bei zugeschaltetem Allradantrieb steuert das Steuergerät 27 einen Kupplungsaktor 28 an. Dieser generiert eine Anpresskraft F_{B}, mit der bei einer Überanpressung eine rutsch- bzw. schlupffreie Übertragung des Radmomentes M_{HA} zur Hinterachse HA gewährleistet ist.

Das Steuergerät 27 steuert eine Motormomentenbegrenzung, bei der das Antriebsaggregat 1 auf ein maximal zulässiges Motormoment Mₘₒₜ,ₘₐₓ begrenzbar ist. Um bei einem Anfahrvorgang eine hohe Fahrzeug-Beschleunigung zu erreichen, erfolgt die Ermittlung sowie Anpassung des maximal zulässigen Motormoments M_{mot,max} während des Anfahrvorgangs an die aktuelle Fahrsituation kontinuierlich, damit eine Vorderachs-Überlastung vermieden wird. Eine solche Vorderachs-Überlastung ergibt sich insbesondere in einer Fahrsituation, bei der die Vorderachse VA auf Asphalt (das heißt hoher Vorderachsreibwert) und die Hinterachse HA des Allradantriebs auf Eis-Untergrund (das heißt geringer Hinterachsreibwert) abtreibt.

Wie oben erwähnt, erfolgt die Ermittlung und Anpassung des maximal zulässigen Motormoments Mₘₒₜ,ₘₐₓ in einer Auswerteeinheit 29 des Steuergeräts 27 zum Beispiel während eines Anfahrvorgangs. Auf diese Weise ergibt sich beim Anfahren ein wesentlich schnelleres Ansprechverhalten, da das maximal zulässige Motormoment Mₘₒₜ,ₘₐₓ wesentlich höher setzbar ist als bei gängigen, aus dem im Stand der Technik bekannten Berechnungsverfahren, ohne dass es zu einer Achsüberlastung an der Vorderachse VA kommt.

Wie aus der Fig. 2 hervorgeht, dient als Startwert bei der Ermittlung des maximal zulässige Motormoment Mₘₒₜ,ₘₐₓ ein Vorderachs-Überlast-Schwellwert M_{VA,Ü}. Der Vorderachs-Überlast-Schwellwert M_{VA,Ü} ist konstruktiv vorgegeben und in der Auswerteeinheit 29 hinterlegt. Bei Erreichen des Vorderachs-Überlast-Schwellwerts M_{VA,Ü} besteht die Gefahr einer Bauteilbeschädigung an der Vorderachse VA.

Der Startwert (das heißt der Vorderachs-Überlast-Schwellwert M_{VA,Ü}) wird im Fahrbetrieb situationsbedingt angehoben, und zwar durch Aufaddieren von Momentenanteilen, die in der obigen Fahrsituation die Vorderachse VA entlasten, nämlich einem maximal zulässigen potentiellen Hinterachs-Trägheitsmoment M_{T,HA} sowie einem Motor-Trägheitsmoment M_{T,mot} und entweder einem Hinterachs-Mindest-Achsmoment M_{HA,absetz} oder einem EDS-Gesamtmoment M_{EDS}.

Die oben angegebenen Momentenanteile werden in den Programmbausteinen 35, 37, 39, 41 der Auswerteeinheit 29 ermittelt. Diese sind in Signalverbindung mit einem Summierglied 45, in dem der Vorderachs-Überlast-Schwellwert M_{VA,Ü} mit den, die Vorderachse VA entlastenden Momentenanteilen addiert wird. Die Summe daraus ergibt das maximal zulässige Motormoment M_{mot,max}.

Wie nachfolgend ausgeführt ist, werden das maximal zulässige potentielle Hinterachs-Trägheitsmoment M_{T,HA} und das Hinterachs-Mindest-Achsmoment M_{HA,absetz} nicht auf der Grundlage einer sensorisch erfassten Winkelbeschleunigung d*ω* und einer Masseträgheit der jeweiligen Komponenten berechnet, sondern in den Programmbausteinen 35 und 39 abgeschätzt. Auf diese Weise kann das maximal zulässige Motormoment M_{mot,max} bereits initial angehoben werden, ohne dass auf eine sensorische Erfassung der Winkelgeschwindigkeit *ω* gewartet werden muß.

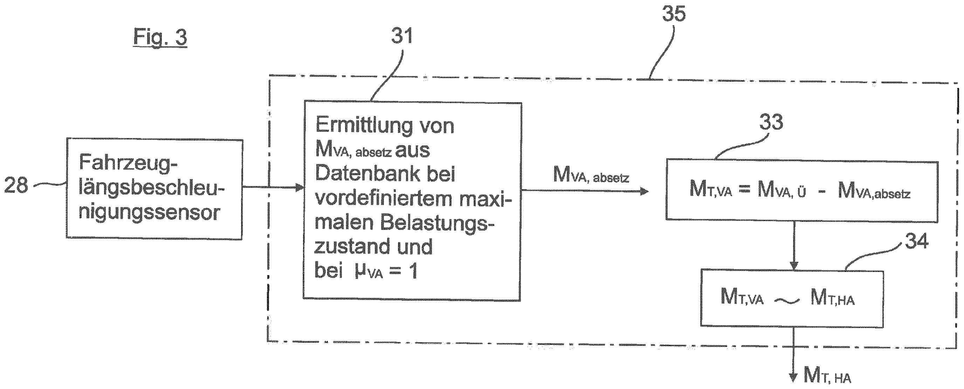

Die Ermittlung des die Vorderachse VA entlastenden maximal zulässigen potentiellen Hinterachs-Trägheitsmoment M_{T,HA} erfolgt in einem ersten Programmbaustein 35 der Auswerteeinheit 29, der in der Fig. 3 detaillierter gezeigt ist. Demzufolge weist der Programmbaustein 35 eine erste Ermittlungseinheit 31 auf, in der zunächst ein an der Vorderachse VA maximal absetzbares Vorderachsmoment M_{VA,absetz} ermittelt wird. In der ersten Ermittlungseinheit 31 wird das an der Vorderachse VA maximal absetzbare Achsmoment M_{VA,absetz} auf der Grundlage eines vordefinierten maximalen Beladungszustandes sowie eines auf 1 gesetzten Vorderachsreibwerts µ_{VA} (zum Beispiel über Kennlinien oder Tabellen) ermittelt. In dem vordefinierten maximalen Beladungszustand fließen der Fahrzeug-Schwerpunkt sowie ein vorgegebenes Maximal-Gewicht des Fahrzeugs ein. Bei der Ermittlung wird daher von einem Extremfall ausgegangen, bei dem auf der Vorderachse VA ein maximales Gewicht lastet und der Vorderachsreibwert µ_{VA} bei 1 liegt.

In der Fig. 2 ist die erste Ermittlungseinheit 31 in Signalverbindung mit einem Längsbeschleunigungssensor 28, so dass das maximal absetzbare Vorderachsmoment M_{VA,absetz} in Abhängigkeit von der aktuellen Fahrzeug-Längsbeschleunigung ax erfolgt. Bei stehendem Fahrzeug entspricht die Längsbeschleunigung einer Fahrbahn-Steigung. Bei beschleunigendem Fahrzeug entspricht die Längsbeschleunigung einem Gesamtwert aus der Fahrbahnsteigung und einer Fahrzeug-Beschleunigung.

Das in der ersten Ermittlungseinheit 31 ermittelte maximal absetzbare Vorderachsmoment M_{VA,absetz} wird in der Fig. 3 zu einer Subtraktionseinheit 33 geleitet. In der Subtraktionseinheit 33 wird ein maximal zulässiges potentielles Vorderachs-Trägheitsmoment M_{T,VA} ermittelt, und zwar durch Subtraktion des maximal absetzbaren Vorderachsmoments M_{VA,absetz} vom Vorderachs-Überlast-Schwellwert M_{VA,Ü}. Das maximal zulässige potentielle Hinterachs-Trägheitsmoment M_{T,VA} definiert einen Schwellwert, der von einem tatsächlichen Vorderachs-Trägheitsmoment erreichbar ist, ohne den Vorderachs-Überlast-Schwellwert M_{VA,Ü} zu überschreiten.

In der Fig. 2 weist der Programmbaustein 35 zudem eine zweite Ermittlungseinheit 34 auf, in der anhand des maximal zulässigen potentiellen Vorderachs-Trägheitsmoments M_{T,VA} das maximal zulässige potentielle Hinterachs-Trägheitsmoment M_{T,HA} ermittelbar ist.

Bei der Bestimmung des maximal zulässigen Hinterachs-Trägheitsmoments M_{T,HA} in der zweiten Ermittlungseinheit 34 wird der Sachverhalt genutzt, das im Geschlossenzustand der Mittenkupplung das Trägheitsmoment M_{T,HA} an der Hinterachse HA mit dem Trägheitsmoment M_{T,VA} an der Vorderachse VA linear korreliert, und zwar in Abhängigkeit der Trägheitsanteile der Komponenten der Fahrzeugachsen VA, HA und den dazwischen liegenden Komponenten.

Vor diesem Hintergrund werden in der zweiten Ermittlungseinheit 31 die Massenträgheiten der Komponenten der Vorderachse VA mit den Massenträgheiten der Komponenten der Hinterachse HA in ein Masseträgheits-Verhältnis gesetzt. Unter dessen Berücksichtigung wird in einer einfachen Dreisatz-Berechnung der maximal zulässige potentielle Trägheitsmomenten-Anteil M_{T,HA} an der Hinterachse HA berechnet.

Gemäß der Fig. 2 wird im zweiten Programmbaustein 37 der Auswerteeinheit 29 das, die Vorderachse VA entlastende Motor-Trägheitsmoment M_{T,mot} (=Jₘₒₜ·d*ω*ₘₒₜ) berechnet, wobei Jmot die Masseträgheit und *ω*ₘₒₜ die sensorisch erfassbare Winkelgeschwindigkeit der Motorkomponenten ist.

Im dritten Programmbaustein 39 der Auswerteeinheit 29 wird ein an der auf Eis-Untergrund stehenden Hinterachse HA minimal absetzbares Mindest-Achsmoment M_{HA,absetz} abgeschätzt, und zwar bei einem geschätzten Hinterachsreibwert µ_{VA} zwischen zum Beispiel 0,01 und 0,1.

Im vierten Programmbaustein 41 werden ein Zusatzmoment M_{zusatz} und ein Bremsmoment M_{B} zu einem Gesamtmoment M_{EDS} summiert. Das Zusatzmoment M_{zusatz} und das Bremsmoment M_{B} ergeben sich bei einem nachfolgend beschriebenen EDS-Eingriff (EDS = elektronische Differenzialsperre) an der Hinterachse HA.

Für einen solchen EDS-Eingriff kann die Antriebsvorrichtung eine elektronische Differenzialsperre aufweisen, mit der ein beim Anfahren durchdrehendes Fahrzeugrad 11 der Hinterachse HA mit einem von der Bremsanlage generierten Bremsmoment M_{B} gezielt abbremsbar ist. Dadurch wird über das Hinterachsdifferenzial 17 das andere Fahrzeugrad 11 der Hinterachse HA mit einem Zusatz-Drehmoment M_{zusatz} beaufschlagt, dessen Betrag dem des Bremsmomentes M_{B} gleicht. Wie bereits weiter oben erwähnt, wird im Programmbaustein 41 das Zusatzmoment M_{zusatz} und das Bremsmoment M_{B} zu einem Gesamtmoment M_{EDS} aufsummiert. Das Gesamtmoment M_{EDS} wird - zusätzlich zu den obigen Trägheitsmomenten sowie dem Mindest-Hinterachsmoment - dem maximal absetzbaren Achsmoment M_{VA,absetz} aufaddiert, um daraus das maximal zulässige Motormoment M_{mot,max} zu erhalten.

Wie aus der Fig. 2 weiter hervorgeht ist im Signalweg zwischen den beiden parallelgeschalteten Programmbausteinen 39, 41 und dem Summierglied 45 ein erster Vergleicherbaustein 42 zwischengeschaltet. Der erste Vergleicherbaustein 42 leitet den größeren Momenten-Wert aus dem Mindest-Hinterachsmoment M_{HA,absetz} und dem EDS-Gesamtmoment M_{EDS} zum Summierglied 45 weiter und hält den kleineren Wert zurück.

Dem ersten Vergleicherbaustein 42 ist ein zweiter Vergleicherbaustein 44 nachgeschaltet. Im zweiten Vergleicherbaustein 44 wird der vom ersten Vergleicherbaustein 42 weitergeleitete größere Wert mit einem aktuellen Mittenkupplungsmoment M_{Kupplung} verglichen. Der zweite Vergleicherbaustein 44 leitet dabei den kleineren Wert aus dem Vergleich weiter. Das heißt, dass das an der Hinterachse HA abgenommene Moment auf die Höhe des gestellten Mittenkupplungsmoments begrenzt ist (sofern dieses niedriger ist als die potentiell möglichen Hinterachsmomente).

## Patentansprüche

1. Antriebsvorrichtung für ein allradgetriebenes, zweispuriges Kraftfahrzeug, in dessen Antriebsstrang ein Antriebsaggregat (1) im Fahrbetrieb permanent auf eine erste Fahrzeugachse (VA) abtreibt und über eine Mittenkupplung (13) auf eine zweite Fahrzeugachse (HA) abtreibt, wobei im Geschlossenzustand der Mittenkupplung (13) die zweite Fahrzeugachse (HA) dem Antriebsstrang zugeschaltet ist und im Offenzustand der Kupplung (13) die zweite Fahrzeugachse (HA) vom Antriebsstrang abgekoppelt ist, wobei in einer Fahrsituation mit zugeschaltetem Allradantrieb sowie mit unterschiedlich großen, zwischen den Fahrzeugrädern und der Fahrbahn wirkenden Achsreibwerten (µ_{VA}, µ_{HA}) an der Fahrzeugachse mit großem Achsreibwert (µ_{VA}) ein größeres Radmoment (M_{VA}) absetzbar ist als an der Fahrzeugachse mit kleinem Achsreibwert (µ_{HA}), und wobei ein Steuergerät (27) vorgesehen ist, das zur Motormomentenbegrenzung das Antriebsaggregat (1) auf ein maximal zulässiges Motormoment (M_{mot,max}) begrenzt, wobei die Antriebsvorrichtung so gestaltet ist, dass zur Vermeidung einer Achsüberlastung an der Fahrzeugachse mit großem Achsreibwert (µ_{VA}) das Steuergerät (27) eine Auswerteeinheit (29) aufweist, mit der das maximal zulässige Motormoment (M_{mot,max}) ermittelbar und anpassbar ist, und dass das maximal zulässige Motormoment (M_{mot,max}) aus einer Addition (45) eines in der Auswerteeinheit (29) hinterlegten, konstruktiv vorgegebenen Überlast-Schwellwerts (M_{VA,Ü}), bei dessen Erreichen die Gefahr einer Bauteilbeschädigung an der Fahrzeugachse mit großem Achsreibwert (µ_{VA}) vorliegt, mit zumindest einem maximal zulässigen, potentiellen Trägheitsmomenten-Anteil (M_{T,HA}) an der Fahrzeugachse mit kleinem Achsreibwert (µ_{HA}) ermittelbar ist, welcher Trägheitsmomenten-Anteil (M_{T,HA}) die Fahrzeugachse mit großem Achsreibwert (µ_{VA}) entlastet, dass die Auswerteeinheit (29) einen Programmbaustein (35) aufweist, in dem der maximal zulässige, die Fahrzeugachse mit großem Achsreibwert (µ_{VA}) entlastende Trägheitsmomenten-Anteil (M_{T,HA}) an der Fahrzeugachse mit kleinem Achsreibwert (µ_{HA}) ermittelbar ist, und dass der Programmbaustein (35) eine erste Ermittlungseinheit (31), in der ein an der Fahrzeugachse mit großem Achsreibwert (µ_{VA}) maximal absetzbares Achsmoment (M_{VA,absetz}) ermittelbar ist, eine Subtraktionseinheit (33), in der ein maximal zulässiges potentielles Trägheitsmoment (M_{T,VA}) an der Fahrzeugachse mit großem Achsreibwert (µ_{VA}), bei dem noch keine Achsüberlastung vorliegt, ermittelbar ist, wobei die Ermittlung des Trägheitsmoments (M_{T,VA}) durch Subtraktion des maximal absetzbaren Achsmoments (M_{VA,absetz}) vom Überlast-Schwellwert (M_{VA,Ü}) erfolgt, und eine zweite Ermittlungseinheit (34) aufweist, in der anhand des maximal zulässigen Trägheitsmoments (M_{T,VA}) an der Fahrzeugachse mit großem Achsreibwert (µ_{VA}) der Trägheitsmomenten-Anteil (M_{T,HA}) an der Fahrzeugachse mit kleinem Achsreibwert (µ_{HA}) ermittelbar ist.

2. Antriebsvorrichtung nach Anspruch 1, **dadurch gekennzeichnet, dass** die Ermittlung des maximal zulässigen Motormoments (M_{mot,max}) im Fahrbetrieb kontinuierlich, insbesondere zumindest während eines Anfahrvorgangs erfolgt, so dass das maximal zulässige Motormoment (M_{mot,max}) kontinuierlich der aktuellen Fahrsituation anpassbar ist.

3. Antriebsvorrichtung nach Anspruch 1 oder 2, **dadurch gekennzeichnet, dass** in der ersten Ermittlungseinheit (31) des Programmbausteins (35) das an der Fahrzeugachse mit großem Achsreibwert (µ_{VA}) maximal absetzbare Achsmoment (M_{VA,absetz}) auf der Grundlage eines vordefinierten maximalen Beladungszustands sowie für einen auf 1 gesetzten Achsreibwert (µ_{VA}) über zum Beispiel Kennlinien ermittelbar ist, und zwar in Abhängigkeit von der aktuellen Fahrzeug-Längsbeschleunigung.

4. Antriebsvorrichtung nach Anspruch 1, 2 oder 3, **dadurch gekennzeichnet, dass** das im Geschlossenzustand der Mittenkupplung (13) das maximal zulässige potentielle Trägheitsmoment (M_{T,HA}) an der, eine Hinterachse bildenden zweiten Fahrzeugachse (HA) mit dem maximal zulässigen potentiellen Trägheitsmoment (M_{T,VA}) an der, eine Vorderachse bildenden ersten Fahrzeugachse (VA) linear korreliert, und zwar in Abhängigkeit der Trägheitsanteile der Komponenten der Fahrzeugachsen (VA, HA) und den dazwischen liegenden Komponenten.

5. Antriebsvorrichtung nach einem der vorhergehenden Ansprüche, **dadurch gekennzeichnet, dass** die Auswerteeinheit (29) einen Programmbaustein (39) aufweist, in dem ein an der Fahrzeugachse mit geringem Achsreibwert (µ_{HA}) absetzbares Mindest-Achsmoment (M_{HA,absetz}) abschätzbar ist, und dass zur Ermittlung des maximal zulässigen Motormoments (M_{mot,max}) das Mindest-Achsmoment (M_{HA,absetz}) dem Überlast-Schwellwert (M_{VA,Ü}) aufaddiert wird.

6. Antriebsvorrichtung nach einem der vorhergehenden Ansprüche, **dadurch gekennzeichnet, dass** die Antriebsvorrichtung eine elektronische Differenzialsperre (EDS) aufweist, mit der ein beim Anfahren durchdrehendes Fahrzeugrad (11) einer Fahrzeugachse mit einem von der Bremsanlage generierten Bremsmoment (Ms) gezielt abbremsbar ist, wodurch über ein Achsdifferenzial (17) das andere Fahrzeugrad (11) der Fahrzeugachse mit einem Zusatz-Drehmoment (Mzusatz) beaufschlagt ist, dessen Betrag dem des Bremsmomentes (Ms) gleicht, und dass die Auswerteeinheit (29) einen EDS-Programmbaustein (41) aufweist, in dem die, die Fahrzeugachse mit großem Achsreibwert (µ_{VA}) entlastenden Gesamtmoment (M_{EDS}) dem Überlast-Schwellwert (M_{VA,Ü}) zusätzlich aufaddiert wird.

7. Antriebsvorrichtung nach Anspruch 6, **dadurch gekennzeichnet, dass** zwischen den Programmbausteinen (39, 41) und einem Summierglied (45) ein erster Vergleicherbaustein (42) zwischengeschaltet ist, und dass der Vergleicherbaustein (42) den größeren Wert aus dem Mindest-Achsmoment (M_{HA,absetz}) an der Fahrzeugachse mit kleinem Achsreibwert (µ_{HA}) und dem EDS-Gesamtmoment (M_{EDS}) zum Summierglied (45) weiterleitet und den kleineren Wert zurückhält.

8. Antriebsvorrichtung nach Anspruch 7, **dadurch gekennzeichnet, dass** dem ersten Vergleicherbaustein (42) ein zweiter Vergleicherbaustein (44) nachgeschaltet ist, und dass in dem zweiten Vergleicherbaustein (44) der im ersten Vergleicherbaustein (42) ermittelte größere Wert mit einem aktuellen Mittenkupplungsmoment (M_{Kupplung}) verglichen wird, und dass der zweite Vergleicherbaustein (44) den kleineren Wert zum Additionsglied (45) weiterleitet.

## Claims

1. Drive device for an all-wheel-drive two-track motor vehicle, in the drive train of which a drive assembly (1) outputs permanently to a first vehicle axle (VA) and outputs to a second vehicle axle (HA) via a centre clutch (13) during the driving operation, wherein in the closed state of the centre clutch (13) the second vehicle axle (HA) is connected to the drive train and in the open state of the clutch (13) the second vehicle axle (HA) is decoupled from the drive train, wherein in a driving situation with connected all-wheel drive and with axle frictional coefficients (µ_{VA}, µ_{HA}) of differing values acting between the vehicle wheels and the road surface, a greater wheel torque (M_{VA}) can be applied to the vehicle axle (VA) with a large axle frictional coefficient (µ_{VA}) than to the vehicle axle with a small axle frictional coefficient (µ_{HA}), and wherein a control device (27) is provided, which limits the drive assembly (1) to a maximally allowable motor torque (M_{mot,max}) in order to limit the motor torque, wherein the drive device is designed so that in order to prevent an axle overload of the vehicle axle with a large axle frictional coefficient (µ_{VA}) a control device (27) has an evaluation unit (29), with which the maximally allowable motor torque (M_{mot,max}) can be determined and adapted, and that the maximally allowable motor torque (M_{mot,max}) can be determined from an addition (45) of a structurally specified overload threshold (M_{VA,Ü}), which is stored in the evaluation unit (29), upon the reaching of which the risk of a component damage to the vehicle axle with a large axle frictional coefficient (µ_{VA}) exists, with at least one maximally allowable potential moment of inertia component (M_{T}, _{HA}) on the vehicle axle with a small axle frictional coefficient (µ_{HA}), which moment of inertia component (M_{T,HA}) relieves the vehicle axle with a large axle frictional coefficient (µ_{VA}), that the evaluation unit (29) has a programming module (35), in which the maximally allowable moment of inertia component (M_{T}, _{HA}) on the vehicle axle with a small axle frictional coefficient (µ_{HA}), which relieves the vehicle axle with a large axle frictional coefficient (µ_{VA}), can be determined, and that the programming module (35) has a first determination unit (31), in which a maximally applicable axle torque (M_{VA,absetz}) on the vehicle axle with a large axle frictional coefficient (µ_{VA}) can be determined, a subtraction unit (33), in which a maximally allowable potential moment of inertia (M_{T, VA}) on the vehicle axle with a large axle frictional coefficient (µ_{VA}), in which no axle overload exists, can be determined, wherein the determination of the moment of inertia (M_{T, VA}) takes place by subtraction of the maximally applicable axle torque (M_{VA,absetz}) from the overload threshold (M_{VA,Ü}), and has a second determination unit (34) in which by means of the maximally allowable moment of inertia (M_{T, VA}) on the vehicle axle with a large axle frictional coefficient (µ_{VA}) the moment of inertia component (M_{T, HA}) on the vehicle axle with a small axle frictional coefficient (µ_{HA}) can be determined.

2. Drive device according to claim 1, **characterised in that** the determination of the maximally allowable motor torque (M_{mot,max}) during the driving operation takes place continuously, in particular at least during a start-up operation, so that the maximally allowable motor torque (M_{mot,max}) can be continuously adapted to the current driving situation.

3. Drive device according to claim 1 or 2, **characterised in that** in the first determination unit (31) of the programming module (35) the maximally applicable axle torque (M_{VA,absetz}) on the vehicle axle with a large axle frictional coefficient (µ_{VA}) can be determined on the basis of a pre-defined maximum load state and for an axle frictional coefficient (µ_{VA}) set to 1 by means, for example, of characteristic curves, specifically as a function of the current vehicle longitudinal acceleration.

4. Drive device according to claim 1, 2 or 3, **characterised in that** in the closed state of the centre clutch (13) the maximally allowable potential moment of inertia component (M_{T, HA}) on the second vehicle axle (HA) forming a rear axle correlates linearly with the maximally allowable potential moment of inertia component (M_{T, VA}) on the first vehicle axle (VA) forming a front axle, specifically as a function of the inertia components of the components of the vehicle axles (VA, HA) and the components lying therebetween.

5. Drive device according to any one of the preceding claims, **characterised in that** the evaluation unit (29) has a programming module (39), in which a minimally applicable axle torque (M_{HA,absetz}) on the vehicle axle with a low axle frictional coefficient (µ_{HA}) can be estimated, and that in order to determine the maximally allowable motor torque (M_{mot,max}) the minimum axle torque (M_{HA,absetz}) is added to the overload threshold (M_{VA,Ü}).

6. Drive device according to any one of the preceding claims, **characterised in that** the drive device has an electronic differential lock (EDS), with which a vehicle wheel (11) of a vehicle axle spinning at start-up can braked in a targeted manner with a braking torque (M_{S}) generated by the brake system, whereby via an axle differential (17) the other vehicle wheel (11) of the vehicle axle is subjected to an additional torque (M_{zusatz}), the amount of which is equal to that of the brake torque (Ms), and that the evaluation unit (29) has an EDS programming module (41), in which the total torque (M_{EDS}) relieving the vehicle axle with a large axle frictional coefficient (µ_{VA}) is additionally added to the overload threshold (M_{VA,Ü}).

7. Drive unit according to claim 6, **characterised in that** between the programming modules (39, 41) and a summing element (45) a first comparison module (42) is interconnected, and that the comparison module (42) forwards the larger value from the minimum axle torque (M_{HA,absetz}) on the vehicle axle with a small axle frictional coefficient (µ_{HA}) and the EDS total torque (M_{EDS}) to the summing element (45) and retains the smaller value.

8. Drive device according to claim 7, **characterised in that** a second comparison module (44) is connected downstream of the first comparison module (42), and that in the second comparison module (44) the larger value determined in the first comparison module (42) is compared with a current centre clutch torque (M_{Kupplung}), and that the second comparison module (44) forwards the smaller value to the addition element (45).

## Revendications

1. Dispositif d'entraînement pour un véhicule automobile à traction intégrale à deux voies, dans la chaîne cinématique duquel un groupe motopropulseur (1) entraîne en permanence dans le mode de conduite un premier essieu de véhicule (VA) et entraîne par l'intermédiaire d'un embrayage central (13) un second essieu de véhicule (HA), dans lequel dans l'état fermé de l'embrayage central (13), le second essieu de véhicule (HA) est raccordé à la chaîne cinématique et dans l'état ouvert de l'embrayage (13), le second essieu de véhicule (HA) est découplé de la chaîne cinématique, dans lequel dans une situation de conduite avec une traction intégrale raccordée et avec des valeurs de friction (µ_{VA}, µ_{HA}) de grandeurs différentes agissant entre les roues de véhicule et la chaussée, un plus grand couple de roue (M_{VA}) peut être appliqué au niveau de l'essieu de véhicule ayant une grande valeur de friction (µ_{VA}) qu'au niveau de l'essieu de véhicule ayant une petite valeur de friction (µ_{HA}), et dans lequel un appareil de commande (27) est prévu, qui limite aux fins de la limitation de couple moteur le groupe motopropulseur (1) à un couple moteur maximal admis (M_{mot,max}), dans lequel le dispositif de propulsion est configuré de telle sorte que pour éviter une surcharge de l'essieu au niveau de l'essieu de véhicule ayant une grande valeur de friction (µ_{VA}), l'appareil de commande (27) présente une unité d'évaluation (29), avec laquelle le couple moteur maximal admis (M_{mot,max}) peut être déterminé et adapté, et que le couple moteur maximal admis (M_{mot,max}) peut être déterminé à partir d'une addition (45) d'une valeur de seuil de surcharge (M_{VA,Ü}) enregistrée dans l'unité d'évaluation (29), structurellement prédéfinie, à laquelle, une fois atteinte, il existe le risque d'un endommagement de composant au niveau de l'essieu de véhicule ayant une grande valeur de friction (µ_{VA}), à au moins une proportion de couple d'inertie (M_{T,HA}) potentielle maximale admise au niveau de l'essieu de véhicule ayant une petite valeur de friction (µ_{HA}), laquelle proportion de couple d'inertie (M_{T,HA}) soulage l'essieu de véhicule ayant une grande valeur de friction (µ_{VA}), que l'unité d'évaluation (29) présente un module de programme (35), dans lequel la proportion de couple d'inertie (M_{T,HA}) maximale admise, déchargeant l'essieu de véhicule ayant une grande valeur de friction (µ_{VA}) peut être déterminée au niveau de l'essieu de véhicule ayant une petite valeur de friction (µ_{HA}), et que le module de programme (35) présente une première unité de détermination (31), dans laquelle un couple d'essieu maximal pouvant être appliqué (M_{VA,appliqu}) au niveau de l'essieu de véhicule ayant une grande valeur de friction (µ_{VA}) peut être déterminé, une unité de soustraction (33), dans laquelle un couple d'inertie (M_{T,VA}) potentiel maximal admis peut être déterminé au niveau de l'essieu de véhicule ayant une grande valeur de friction (µ_{VA}), auquel il n'existe pas encore une surcharge d'essieu, dans lequel la détermination du couple d'inertie (M_{T,VA}) est effectuée par la soustraction du couple d'essieu maximal pouvant être appliqué (M_{VA,appliqu}) de la valeur de seuil de surcharge (M_{VA,Ü}), et une deuxième unité de détermination (34), dans laquelle à l'aide du couple d'inertie (M_{T,VA}) maximal admis au niveau de l'essieu de véhicule ayant une grande valeur de friction (µ_{VA}), la proportion de couple d'inertie (M_{T,HA}) au niveau de l'essieu de véhicule ayant une petite valeur de friction (µ_{HA}) peut être déterminée.

2. Dispositif de propulsion selon la revendication 1, **caractérisé en ce que** la détermination du couple moteur maximal admis (M_{mot,max}) est effectuée dans le mode de conduite en continu, en particulier au moins pendant une opération de démarrage, de sorte que le couple moteur maximal admis (M_{mot,max}) peut être adapté en continu à la situation de conduite instantanée.

3. Dispositif de propulsion selon la revendication 1 ou 2, **caractérisé en ce que** dans la première unité de détermination (31) du module de programme (35), le couple d'essieu maximal pouvant être appliqué (M_{VA,appliqu}) au niveau de l'essieu de véhicule ayant une grande valeur de friction (µ_{VA}) peut être déterminé sur la base d'un état de charge maximal prédéfini ainsi que pour une valeur de friction (µ_{VA}) réglée sur 1 par l'intermédiaire par exemple de courbes caractéristiques, à savoir en fonction de l'accélération longitudinale de véhicule instantanée.

4. Dispositif de propulsion selon la revendication 1, 2 ou 3, **caractérisé en ce que** dans l'état fermé de l'embrayage central (13), le couple d'inertie potentiel maximal admis (M_{T,HA}) au niveau du second essieu de véhicule (HA) formant un essieu arrière est mis en corrélation linéaire avec le couple d'inertie potentiel maximal admis (M_{T,VA}) au niveau du premier essieu de véhicule (VA) formant un essieu avant, et ce en fonction des proportions d'inertie des composants des essieux de véhicule (VA, HA) et des composants intercalés.

5. Dispositif de propulsion selon l'une quelconque des revendications précédentes, **caractérisé en ce que** l'unité d'évaluation (29) présente un module de programme (39), dans lequel un couple d'essieu minimal pouvant être appliqué (M_{HA,appliqu}) au niveau de l'essieu de véhicule ayant une petite valeur de friction (µ_{HA}) peut être estimé, et que pour déterminer le couple moteur maximal admis (M_{mot,max}), le couple d'essieu minimal (M_{HA,appliqu}) est ajouté à la valeur de seuil de surcharge (M_{VA,Ü})_{.}

6. Dispositif de propulsion selon l'une quelconque des revendications précédentes, **caractérisé en ce que** le dispositif de propulsion présente un blocage de différentiel électronique (EDS), avec lequel une roue de véhicule (11), patinant lors du démarrage, d'un essieu de véhicule peut être ralentie de manière ciblée avec un couple de freinage (Ms) généré par le système de freinage, ce qui permet de soumettre par l'intermédiaire d'un différentiel d'essieu (17) l'autre roue de véhicule (11) de l'essieu de véhicule à l'action d'un couple de rotation supplémentaire (Mₛᵤₚₚ), dont la valeur est égale à celle du couple de freinage (Ms), et que l'unité d'évaluation (29) présente un module de programme EDS (41), dans lequel le couple total (M_{EDS}) déchargeant l'essieu de véhicule ayant une grande valeur de friction (µ_{VA}) est ajouté en supplément à la valeur de seuil de surcharge (M_{VA,Ü}).

7. Dispositif de propulsion selon la revendication 6, **caractérisé en ce qu'**un premier module de comparaison (42) est intercalé entre les modules de programme (39, 41) et un organe d'addition (45), et que le module de comparaison (42) transfère la plus grande valeur parmi le couple d'essieu minimal (M_{HA,appliqu}) au niveau de l'essieu de véhicule ayant une petite valeur de friction (µ_{HA}) et le couple total (M_{EDS}) EDS à l'organe d'addition (45) et retient la plus petite valeur.

8. Dispositif de propulsion selon la revendication 7, **caractérisé en ce qu'**un deuxième module de comparaison (44) est branché en aval du premier module de comparaison (42), et que la plus grande valeur déterminée dans le premier module de comparaison (42) est comparée à un couple d'embrayage central (M_{embrayage}) instantané dans le deuxième module de comparaison (44), et que le deuxième module de comparaison (44) transfère la plus petite valeur à l'organe d'addition (45).
